# EUROPEAN PATENT SPECIFICATION

(11) **EP 3 471 853 B1**
(45) Date of publication and mention of the grant of the patent: **27.04.2022**
(21) Application number: 17735019.6
(22) Date of filing: 20.06.2017
(51) Int. Cl.: B01D 35/30, B65D 85/00

(54) **MOBILE FILTER DEVICE FOR CORROSIVE SUBSTANCES**
MOBILE FILTERVORRICHTUNG FÜR KORROSIVE SUBSTANZEN
DISPOSITIF DE FILTRATION MOBILE POUR LES SUBSTANCES CORROSIVES

(30) Priority: 20.06.2016 BE 201605451
(43) Date of publication of application: 24.04.2019
(73) Proprietor: Desotec NV, 8800 Roeselare (BE)
(72) Inventor: DESMET, Joost, 8870 Izegem (BE); SEYNAEVE, Rikie, 8870 Izegem (BE); CALLEWAERT, Jeroen, 8550 Zwevegem (BE); CRAEYE, Johan, 8870 Izegem (BE)
(74) Representative: De Clercq & Partners
(86) International application number: PCT/EP2017/064996
(87) International publication number: WO 2017/220518

(56) References cited:
- WO-A1-2010/065714
- CN-U- 202 730 079
- CN-Y- 2 897 395
- US-A- 2 035 017
- US-A- 2 681 164
- US-A- 3 525 197
- US-A- 3 700 512
- US-A- 5 024 342
- US-A1- 2014 360 891
- US-A1- 2015 021 258
- Anonymous: "FRPMaterial Selection Guide AnEngineer'sGuideto FRPTechnology", , 31 December 2009 (2009-12-31), pages 1-77, XP055096445, Research Triangle Park, NC, USA Retrieved from the Internet: URL:http://www.reichhold.com/corrosion/doc s/Materials Selection Guide Final Version.pdf [retrieved on 2014-01-15]
- Anonymous: "Fibre-reinforced plastic tanks and vessels - Wikipedia", , 16 April 2013 (2013-04-16), pages 1-6, XP055788680, Retrieved from the Internet: URL:https://en.wikipedia.org/w/index.php?t itle=Fibre-reinforced_plastic_tanks_and_ve ssels&oldid=550569927 [retrieved on 2021-03-23]

## Description

### FIELD OF THE INVENTION

Provided herein is a mobile filter device comprising composite materials and configured for safe receiving, handling, processing, filtering and transport of corrosive and/or highly reactive substances.

### BACKGROUND

Many industrial processes generate corrosive and/or highly reactive substances that require a dedicated container to provide for their safe processing and management. Examples of these substances may include, e.g., nitric acid, succinic acid, lactic acid, hydrochloric acid, sulfuric acid, alkaline contents, MCB in HCL and toluene or xylene in alkaline solutions, etc. These substances can be processed using various methods, the most common techniques being air or gas scrubbing, biological filtration, active carbon filtration and incineration. Every processing method has its specific applications, advantages and disadvantages, and cost factors depending on the precise circumstances, in particular the volume and chemical properties (i.e., stability, reactivity, acidity, toxicity, etc.) of the substance.

Critical for such filter devices is the pressure resistance of the container walls (i.e. inner pressure build-up of the substance, and a pressure drop during extraction). Since various metals offer a good pressure resistance, typically a filter device is fabricated using a metal or metal alloy. However, since corrosive materials are commonly known to react (i.e. corrode) with metals, additional precautions may be necessary to provide for corrosion-resistance, such as applying a corrosion-resistant coating layer.

Typically industrial production facilities may have a plurality of static filter devices filtering produced corrosive substances for future discharge. However, as the production volumes of corrosive substances increase, more and more filtering devices are needed to meet the ever growing demands of the industry. An alternative to a static filter device is found is the application of a mobile filter device, which allows the industry to employ a temporary filter device, which is installed or removed depending on the production's throughput. Alternatively, a mobile filter device may also serve to divert the on-site handling of these substances to off-site locations, or to third parties specialized in disposal or filtering of corrosive substances. These mobile filter devices allow companies to cut cost on capital equipment, processing, waste disposal and labor; additionally, their on-demand modularity allows facilities to also save or repurpose space that would otherwise be occupied by numerous static filter devices on hold.

Commonly these mobile filter devices are placed on transport devices so they can be easily and quickly transported to on-site locations. However, often during manipulation of a mobile filter device on to/of a transport device, the metal container wall is exposed to stress factors in the form of (inner) loading pressure, outer handling pressure (e.g., tilting, banging, etc.), and mechanical vibrations. Similar stress factors also occur during the transport process itself, for example, resulting from holes or speed bumps present in the road, excessive maneuvering of the operator, or potentially even collisions of the transport device with an object. Additionally, excessive shaking of a stored substance or filter causes the internal pressure to increase further, causing the container walls to be exposed to high pressure from both sides at the same time.

Any one of said stress factors can result in structural damage, usually in the form of a breach, cavity and/or (micro-)crack being induced in the container wall; in particular the coating layer is especially sensitive to crack formation. Once a crack has formed, any subsequent action may cause further crack propagation along a coating layer potentially resulting in the whole coating layer, or at least parts thereof, breaking loose of a metal container wall. In any of these scenarios a stored corrosive substance gains access to the metal container wall and form holes that may lead to small or large quantities of the corrosive substance spilling outside, detrimental for both user and environmental safety.

To prevent the adverse effects of (micro-)crack formation and propagation in the coating layers, regular inspections may be required to scrutinize the reliability of a mobile filter device. A typical inspection process usually involves fully draining the mobile filter device, cleansing the inside of any dangerous substances, and then proceeding to manually or instrumentally inspect a coating layer. Whenever a breach, cavity and/or (micro-)crack is detected the mobile filter device requires adequate repairs or, depending on the severity of the detected damage and potential corrosive effects, needs to be discarded. Lack of reparations or inspections severely limits the lifetime of such a mobile filter device; however, too regular inspections severely extend the downtime. Thus any technical improvement of the structural resistance of a container wall, thereby decreasing the downtimes and increasing the lifetimes, may lead to significant economic benefits.

Alternatively, thicker and more-stress resistant coatings may be applied; however, they have the disadvantage of diminishing the total volume available for storing and filtering of a corrosive substance. These volume reductions then need to be compensated by increasing the dimensions (e.g., length, diameter, etc.) of a mobile filter device to provide for comparable volumes; which in turn results in a heavier, more expensive mobile filter device that can become increasingly more difficult, cumbersome and dangerous to handle, manage and transport, and also turns out to be more susceptible to stress factors.

The following documents are known in the art:
US 2014/0360891 describes a system for placing as much of adsorbent/absorbent as possible in a container to allow for the maximal adsorption or absorption of targeted molecular constituents in gases, fluids, liquids or mixture thereof; for example, for handling of corrosive substances.

CN 202730079 describes a mobile silica gel filter for regeneration of various waste oil, such as hydraulic oil, turbine oil, steam turbine oil, transformer oil and phosphoric acid grease hydraulic oil.

US 3 700 512 describes a storage tank having a composite wall of reinforced synthetic resin adapted for retaining fluids, particularly for manufacturing underground gasoline storage tanks for use under all earth conditions, such as, water flooded earth.

US 2015/0021258 describes a capture unit for use with an antimicrobial application with recycle features for use in connection with food products and surfaces and other items associated with food processing.

WO 2010/065714 describes a system for the treatment of wastewater. In a particular embodiment an ion exchange tank is described set in a frame or housing, which may provide additional protection as well as simplified handling and transportation.

US 3 700 512 describes a gasoline storage tank having a composite wall that is suitable for underground use.

The FRP Material selection guide from Reichhold (Reichhold, Inc, 2009) is intended to give practicing engineers an understanding of composites technology in order that they may be able to effectively incorporate FRP, polymer concrete, and other polymer materials in their design; for example, for handling of corrosive substances.

There is a need for a mobile filter device to provide a means for safe and secure management and transport of corrosive and/or highly reactive substances. Concretely, there is a need for a mobile filter device to better withstand the stress factors caused by frequent manipulation and transportation, preferably without a significant degradation of the mobile filter device itself, its corrosion-resistant features, and of its functionality, safety, downtime and lifetime. State of art mobile filter devices are inadequate and fail to combine the safety and security, mechanical and structural resilience, and facilitated mobility and filtration in a way that the present invention may achieve.

### SUMMARY OF THE INVENTION

A mobile filter device which may provide an improvement in the safe and secure management and transportation of corrosive and/or highly reactive substances. Concretely, this device may also be capable of withstanding the stress caused factors caused by frequent manipulation and transportation, preferably without significant degradation of the mobile filter device itself or its corrosion-resistant features, and of its functionality, safety, downtime and lifetime. Ideally, this mobile filter device may be capable of storing larger substance volumes (i.e., above 15 m³) without substantially increasing in dimensions to compensate. Thus, the mobile filter device may preferably be lighter or about the same weight and dimensions as current state of art models to further guarantee a compatibility with commonly employed transport devices.

The ability of a mobile filter device to produce satisfactory responses to the industry's expectations depends on its ability to receive, store, filter and transport a corrosive and/or highly reactive substances. A well-designed mobile filter device can improve the safety of the users handling and the operators transporting the mobile filter device. Additionally, it may also improve the environmental safety, by further avoiding or minimizing any spillage of a stored corrosive substance by user mishandling or container wall breaches. State of art mobile filter devices are inadequate and fail to combine the safety and security, mechanical and structural resilience, and facilitated mobility and filtration in a way that the present invention may achieve.

Accordingly, the present invention provides in a mobile filter device for a corrosive substance selected from organic solvents in an alkaline or acid solution and/or combinations thereof, comprising:
- a tank container, configured for receiving, storing and discharging of the corrosive substance;
- a filter, disposed within the tank container, configured for processing a corrosive substance;
- a mount, adapted for repeatable dismountable connection to a transport device;
characterized in that the tank container comprises a metal-free container wall, the container wall comprising a composite material coated with at least one inner corrosion-resistant coating layer disposed along the interior of the container wall, said coating layer being configured for storing a corrosive substance;
wherein the composite material of the metal-free container wall consists of a bisphenol-based epoxy vinyl ester resin and at least one reinforcement material, and the coating layer consists of a novolac-based vinyl epoxy vinyl ester resin and at least one reinforcement material.

In some embodiments the container further comprises at least one outer corrosion-resistant coating layer disposed along an outer container wall.

In some embodiments the tank container comprises at least one outer corrosion-resistant coating layer disposed along the exterior of the container wall.

In some embodiments the inner corrosion-resistant coating layer comprises a coating material similar to the outer corrosion-resistant coating layer.

In some embodiments the inner corrosion-resistant coating layer comprises the same material as the outer corrosion-resistant coating layer; preferably consists of the same material.

In some embodiments the composite material of the metal-free container wall is disposed between at least two coating layer, preferably an inner corrosion-resistant coating layer and an outer corrosion-resistant coating layer, and is configured for providing structural stability to the tank container.

In some embodiments the composite material further comprises at least one reinforcement material of the following list: glass fibers (e.g. E-glass, S-glass, C-Glass, ECR-glass), carbon, textile, woven reinforcements, knitted reinforcements, chopped strand mat or chop reinforcements, continuous roving reinforcement, surface Veils (e.g. glass veils), carbon graphite, carbon veils and cores (e.g end-grain balsa, styrene acrylonitrile (SAN) foam, polyvinyl chloride (PVC) foam and/or polyethylene terephthalate (PET) foam); preferably carbon veils, C-glass veils, ECR(electronic corrosion-resistant)-glass fibers, ECR-glass veil. In some embodiments the filter is adapted for processing a corrosive material according to method from the following list: air or gas scrubbing, biological filtering, adsorption beds, sand filtration, two layer filtration, resin ion exchange, incineration, molecular filtering and/or carbon filtering.

In some embodiments the filter is an active carbon filter.

In some embodiments the mount is non-dismountably affixed to the tank container.

In some embodiments the mount is configured to repeatedly attach, latch, lock, link, couple and/or connect with a complementary transport mount comprised upon a transport device .

In some embodiments the tank container has a cylindrical shape and is characterized by a total length of at least 4.0 m to at most 15.0 m, more preferably at least 6.0 m to at most 10.0 m, most preferably at least 7.0 m to at most 9.0 m; most preferably about 8.5 m.

In some embodiments the tank container has a cylindrical shape and is characterized by an inner diameter of at least 1.0 m to at most 4.5 m, more preferably at least 1.5 m to at most 3.5 m, most preferably at least 2.0 m to at most 3.0 m; most preferably about 2.2 m.

In some embodiments the tank container has a cylindrical shape and is characterized by an outer diameter of at least 1.0 m to at most 4.6 m, more preferably at least 1.5 m to at most 3.6 m, most preferably at least 2.0 m to at most 3.1 m; most preferably about 2.4 m.

In some embodiments the tank container has a cylindrical shape and is characterized by a wall thickness, defined as half the difference between the outer diameter and the inner diameter, of at least 1.0 cm to at most 20.0 cm; preferably at least 2.5 cm to at most 15.0 cm; more preferably at least 4.0 cm to at most 10.0 cm; most preferably at least 5.0 cm to at most 7.5 cm; most preferably about 5.5 cm.

In some embodiments the tank container has a cylindrical shape and is characterized by an inner volume of at least 1.0 m3 and at most 40.0 m3, preferably at least 10.0 m3 to at most 35.0 m³; more preferably at least 20.0 m³ to at most 30.0 m³; most preferably at least 22.5 m³ to at most 27.5 m³; most preferably about 25 m³.

In some embodiments the corrosion-resistant coating layer is characterized by a thickness of at least 1.0 mm to at most 10.0 mm; preferably at least 2.5 mm to at most 7.5 mm; more preferably at least 3.0 mm to at most 7.0 mm; most preferably at least 4.0 mm to at most 6.0 mm; most preferably about 5.0 mm.

In some embodiments the tank container is configured to withstand an inner pressure of at least 0 bar to at most 15 bar; preferably at least 2 bar to at most 10 bar; more preferably at least 3 bar to at most 7 bar; most preferably at least 4 bar to at most 6 bar; most preferably about 5 bar.

In a further aspect, the present invention relates to the use of the mobile filter device according to the present invention.

In some embodiments the use of the mobile filter device is for receiving, storing, handling, filtering and/or transporting a corrosive substance of the following list: nitric acid, Succinic acid, lactic acid, hydrochloric acid, sulfuric acid, alkaline contents, mono chloro benzene (MCB) in hydrochloric acid (HCL) and toluene or xylene in alkaline solutions.

### BRIEF DESCRIPTION OF THE DRAWINGS

The numeric references may be found discussed in detail in Examples 1-5.
**Fig. 1****:** Illustration of an example of a mobile filter device (100) as described herein when viewed from two different viewing angles, namely **FIG. 1A** shows first perspective and **FIG. 1B** shows a second perspective obtained through rotation of 180° degrees.
**Fig. 2**: Schematic of an exemplary embodiment of a mobile filter device (100) as described herein from two different viewing angles, namely **FIG. 2A** shows a first perspective and **FIG. 2A** shows a second perspective obtained through rotation of 90° degrees.
**Fig. 3****:** Illustration of a transport process of a mobile filter device (100) using a transport device (400) as described herein; (a) prior to connection, (b) during connection and lift, (c) during load through tilting and (d) transport.
**Fig. 4****:** Illustration of an example of a mobile filter device (100) as described herein when viewed from two different viewing angles, namely FIG. **4A** shows a first perspective and **FIG. 4B** shows a second perspective obtained through rotation of 90° degrees.

### DETAILED DESCRIPTION OF THE INVENTION

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per* se, by means of further exemplification, the term encompasses *inter alia* a reference to any one of said members, or to any two or more of said members, such as, *e.g.,* any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. It is to be understood that other embodiments may be utilised and structural or logical changes may be made without departing from the scope of the present invention. The following detailed description, therefore, is not to be taken in a limiting sense, and the scope of the present invention is defined by the appended claims.

As used herein the terms "corrosive substance", "highly reactive substance", and "substance" designate a shared definition and may be used interchangeably. Accordingly, the term corrosive substance generally refers to a matter which has a specific composition and chemical properties; in particular matter that will destroy and damage other matter with which it comes into contact. Examples of corrosive substances commonly used by the industry as known in the art and generally include combinations of organic solvents in a strong alkaline or acid solution; examples may include, but are not limited to, nitric acid, succinic acid, lactic acid, hydrochloric acid, sulfuric acid, alkaline contents, MCB in HCL and toluene or xylene in alkaline solutions, and equivalently chemically reactive substance, and/or combinations thereof.

As used herein the term "tank container" generally refers to a device creating a partially or fully enclosed space that may be used to receive, store, and transport a substance or materials; specifically, a tank container is configured for receiving and storing of a corrosive substance with elements commonly known in the art for receiving, storing and transporting a corrosive substance. These elements may further include structures such as a manhole (i.e., inspection or maintenance hole), a discharge for providing flow of a stored substance, a gas inlet or outlet (e.g., air, filtering gas, etc.), connector tubes for flow of a liquid or gas. The material providing the aforementioned enclosure is further referred to as the "tank container wall" or "container wall". Accordingly, the interior of the container wall (e.g. facing the inside of the tank) is referred to as an inner container wall, and the exterior of the container wall (e.g. facing the outside of the tank) is referred to as an outer container wall.

As used herein the terms "composite material", otherwise known as a "composition material" or "composite", refer to a material made from two or more constituent materials with different physical or chemical properties that, when combined, produce a material with characteristics different from the individual components. Commonly a composite material further comprises at least one material that is configured for providing a structural or mechanical stability; meaning that it may withstand external forces, such as stress, pressure and vibrations, without significant changes in the skeletal shape or framework of the object that comprises the composite material.. The composite material is non-metallic and metal-free; it does not comprise metals or metal-based materials (e.g. alloys).

As used herein the terms "coating layer" or "corrosion-resistant coating layer" refer to a covering that is applied to a surface of an object; specifically, a covering that is applied on a surface (e.g. interior or exterior) of a container wall as described herein. For the purposes of the present invention the coating layer has material properties which provide a corrosion-resistant protection to a surface and act as a barrier to inhibit a contact between a corrosive substance and said object surface. In particular, the coating material consists of a novolac-based epoxy vinyl ester resin. The coating material is non-metallic and metal-free; it does not comprise metals or metal-based materials (e.g. alloys). A coating layer may be a layer of a material ranging from fractions of a nanometer (i.e. a monolayer) to several millimeters or centimeters (i.e. a multilayer) in thickness. Preferably, the coating is applied through a method of controlled deposition of a coating material; or is intermixed with a composite material as described elsewhere. Accordingly the coating layer essentially forms a distinct part of the container wall in that it does not form a separate compartment. This is for instance different from a cartridge or a liner that are instead inserted into a container and attached thereto, thus forming a separate compartment within the container.

As used herein the term "filter" refers to any porous device for removing impurities or solid particles from a liquid or gas passed through it; specifically, for filtering of corrosive or highly reactive substances obtained through an industrial process. Examples of filtering methods as known in the art and commonly used by the industry may include, but are not limited to, biological filtering, carbon filtering, adsorption beds, sand filtration, two layer filtration, resin ion exchange, and the like. Preferably the filter may be an active carbon filter that uses a bed of activated carbon to remove contaminants and impurities using physical chemical adsorption, whereby pollutant molecules in the fluid to be treated are trapped inside the pore structure of the carbon substrate. Alternatively, other processing methods may be used for processing of corrosive or highly reactive substances, such as air, wet or gas scrubbing, incineration, and the like. These alternative processing methods are particularly useful for processing corrosive or highly reactive substances which are very difficult or impossible to purge using filtering methods.

As used herein the term "mount" refers to a structure to which another structure is affixed, or on which a structure is placed for improved accessibility or use; specifically, a mount may be directly or indirectly in contact with the tank container and may provide a backing, setting, or support to the tank container. Preferably, the mount may further be used for improved manipulation or transportation of the mobile filter device. The mount may be produced using various materials, such as a composite material similar to the container wall, but also a different material such as a metal, a metal alloy, etc.; as long as the material may provide sufficient structural stability to warrant the presented purposes.

As used herein the term "transport device" refers to a device designed to transport cargo. Preferably it is a motorized vehicle commonly used for transporting of tank containers. More preferably it is a motorized vehicle equipped with a lifting device capable of placing or removing the mobile filter device from a location. Most preferably it is capable of placing the mobile filter device in an upright position, and transporting the mobile filter device in a level position. Examples of transport device are known in the art and those commonly used by the industry may include, but are not limited to, a truck, forklift, boat, train, etc.

In a first aspect the invention relates to a mobile filter device configured for securely storing, filtering and transporting a corrosive and/or highly reactive substance selected from organic solvents in an alkaline or acid solution and/or combinations thereof, the mobile filter device comprising:
- a tank container, configured for receiving, storing and discharging of the corrosive substance;
- a filter, disposed within the tank container and configured for processing of the corrosive substance;
- a mount, adapted for repeatable dismountable connection to a transport device (400);
characterized in that the tank container comprises a metal-free container wall, the container wall comprising a composite material coated with at least one inner corrosion-resistant coating layer disposed along the interior of the container wall, said coating layer being configured for storing a corrosive substance;
wherein the composite material of the metal-free container wall consists of a bisphenol-based epoxy vinyl ester resin and at least one reinforcement material, and the coating layer consists of a novolac-based vinyl epoxy vinyl ester resin and at least one reinforcement material..

The corrosion-resistance may be achieved by implementing corrosion-resistant features into or onto the mobile filter device; preferably, into or onto the container wall. Concretely, the corrosion-resistance may be achieved by covering the interior of the container wall, also referred to as an inner container wall, with at least one corrosion-resistant coating layer to prevent direct contact of a corrosive substance with an inner container wall. Said container wall is characterized in that is comprises a composite material that is essentially metal-free; and preferably comprises at least one polymer or polymer derivative.

By "essentially metal-free" it is understood that the object or structure (e.g. the tank container wall) was produced using materials that are non-metallic and free of metal. For example, a tank container wall that is essentially metal-free does not comprise metals or metal-based materials (e.g. alloys); it is a metal-free container wall. For example, a coating layer that is essentially metal-free does not comprise metals or metal-based materials; it is a metal-free coating layer. For example, a conveyance element that is essentially metal-free does not comprise metals or metal-based materials; it is a metal-free conveyance element.

The inventors have observed that certain polyester resins form a very sturdy and robust composite container wall when covered with certain corrosion-resistant coating layer. This composite container wall attains a structural stability with stress resistant properties above those achieved using traditional metal container walls covered with traditional coating layers. In some embodiments a mobile filter device for a corrosive substance may comprise: a tank container, adapted for receiving and storing of a corrosive substance; a filter, comprising filtering screens and filtering tubes disposed within the tank container, configured for providing a filtering of the corrosive substance; a mount, adapted for repeatable dismountable connection to a transport device; wherein the tank container further comprises a container wall, characterized in that the container wall comprises a composite material that is essentially metal-free, and, wherein the composite material further comprises at least one corrosion-resistant coating layer disposed along an inner container wall, thus forming an inner corrosion-resistant coating layer.

In particular, a mobile filter device for a corrosive substance comprises a tank container, configured for receiving, storing and discharging of the corrosive substance; a filter, disposed within the tank container and configured for processing of the corrosive substance; a mount, adapted for repeatable dismountable connection to a transport device; characterized in that the tank container comprises a metal-free container wall, the container wall comprising of a composite material and at least one inner corrosion-resistant coating layer disposed along the interior of the container wall. The composite material and the at least one inner corrosion-resistant coating are considered to form a single wall-structure; they are not separable without damaging the structural features of the tank containers, thereby forming a robust and durable structure.

A metal-free container wall comprised of a composite material that is essentially metal-free may achieve a better adhesion of the (inner or outer) coating layer to the (respectively, interior or exterior of a) container wall. This in turn may have advantages for production and assembly of a mobile filter device, since fewer (pre- or post-) processing steps may be required to obtain a fixed inner coating layer. It may have further advantages for durability of a mobile filter device, since a better adhesion may prevent breaking of fragments, or of the entire inner coating layer, which may expose the inner container wall to the corrosive effects of the stored corrosive substance. The coating layer and composite material may thus form a stronger, more durable and/or resistant container wall. It may have further advantages for environmental safety and user security of a mobile filter device, since a reduced rate of substance exposure may decrease the chance for cavity formation which may lead to spilling of the stored substances to the external environment.

Additionally, since many of the composite materials offer a better elasticity than current state of art materials, they may better absorb external stress in the form of vibrations, pressure or strain, and thus may cause less transfer of a stress factor to a coating layer. Consequently, these absorptive properties may reduce the formation of (micro-)cracks or breaches in the coating layer and may further reduce the propagation of (micro-)cracks along the coating layer. It may have further advantages for the lifetime and downtime of a mobile filter device, due to a reduced incidence rate for structural damage; moreover, should a structural damage occur anyhow, it may prove less detrimental and also be more easily repaired in comparison with state of art devices. The mobile filter device can be further configured for secure receiving, handling and discharging a corrosive and/or highly reactive substance that may be provided to, or discharged from the mobile filter device.

The corrosion-resistance may be achieved by implementing corrosion-resistant features into or onto the mobile filter device; preferably, into or onto the container wall. Concretely, the corrosion-resistant handling may be achieved by covering the exterior of the container wall, also referred to as an outer container wall with at least one corrosion-resistant coating layer to prevent direct contact of a corrosive substance with an outer container wall resultant from, for example, spills, leakages or human errors. Unexpectedly, by using a polymer or polymer derivative, preferably polyester resins as described above, an external coating layer may be more easily applied on an outer container wall. This outer coating layer may prevent an accidental spill or splatter of the corrosive substance onto the outer container wall; which could otherwise have damaged or degraded the container wall. In certain situations, where a spill may have gone unnoticed or untreated, the spilled substance may further corrode the external wall during transport of the mobile filter device; potentially resulting in a cavity formation from the outside-in, jeopardizing its safety and operational durability (e.g., lifetime and downtime). Therefore, this composite container wall comprising at least one coating layer disposed along the inner wall and at least one coating layer disposed along the outer wall may prevent a series of various structural damages that would have occurred to traditional metal container walls without an outer coating layer.

Supportive elements such as fasteners (e.g. bolts, screws and the like) connected to the tank container may be metal-based as these are not considered to form part of the container wall structure, but are rather attached thereto. Additionally, other supportive elements may also be at least partially metal-based; for example, joints may be provided with metal hinges; for example, supportive metal rings may be placed around the tank container; for example, metallic connectors can be established between the tank container and the mount or the mounting mechanism. Preferably, the presence of metal materials is limited to elements that are not expected to come in contact with a corrosive substance. In some preferred embodiments the supportive elements are essentially metal-free; they are metal free supportive elements.

Conveyance elements such as pipes, tubes, funnels, discharges, and the like that are intended to come in direct contact with a corrosive substance (e.g. guide or channel the flow of the liquid) may also be metal based. In some preferred embodiments the conveyance elements are essentially metal-free; they are metal-free conveyance elements. In some embodiments channeling elements have a composition similar to the tank container wall; such as a composite material with an inner coating layer; such as a composite material with an inner and an outer coating layer.

In some embodiments all (secondary) elements are essentially metal-free; they are metal-free (secondary) elements. This allows for a robust design with a very durable corrosion resistance.

In some embodiments a mobile filtering device for a corrosive substance may comprise: a tank container, adapted for receiving and storing of a corrosive substance; a filter, comprising filtering screens and filtering tubes disposed within the tank container, configured for providing a filtering of the corrosive substance; a mount, adapted for repeatable dismountable connection to a transport device; wherein the tank container further comprises a container wall, characterized in that the metal-free container wall is comprised of a composite material that is essentially metal-free, and, wherein the composite material further comprises at least one corrosion-resistant coating layer disposed along the interior of the inner container wall, thus forming an inner corrosion-resistant coating layer; and at least one coating layer is disposed along the exterior of the outer container wall, thus forming an outer corrosion-resistant coating layer. The composite material, the at least one inner corrosion-resistant coating and the at least one outer corrosion-resistant coating are considered to form a single wall-structure; they are not separable without damaging the structural features of the tank containers, thereby forming a robust and durable structure.

Accordingly, the at least one inner and the at least one outer corrosion-resistant layers together with the composite material (preferably disposed in-between) form a container wall, which is produced using materials that are non-metallic and free of metal; the metal free tank container wall does not comprise metals or metal-based materials (e.g. alloys). However, as indicated above, elements that are not considered to form part of the container wall may be metallic or partially metallic; for example supportive elements or structures. An exemplary embodiment of the configuration of a mobile filter device may be found in Example 1.

During manipulation of a mobile device, such as when a corrosive substance is provided or discharged, or during cleansing or inspection of the mobile filter device, it may be common that an accidental spill of the corrosive substance comes into contact with the external container wall; for example, during unexpected tilting of a mobile filter device, with a not properly closed manhole or malfunctioning tubing. Depending on the chemical properties of the spilled corrosive substance and the volume of the spill, this incident may result in minor to very extensive damage to the external container wall. Even small drops that may appear seemingly harmless at first sight may cause extensive aggregate damage when their frequency starts adding up, considering that the mobile devices may be commonly exposed to such manipulations for the purposes of providing a daily transport of corrosive substances, or more.

An improved adhesion of a coating layer to a container wall comprised of a composite material that is essentially metal-free, may allow a covering of the outer wall of the tank container with an outer coating layer. In contrast, covering state of art devices with an outer coating layer may prove difficult due a lack of adhesion; especially for metal walls. This may also result in advantages for production and assembly of a mobile filter device, since fewer (post)processing steps may be required to obtain a fixed outer coating layer. It may have further advantages for manipulation and transport of a mobile filter device, since the presence of an outer coating layer will prevent spills of the corrosive substance to react with the container walls resultant in cavity formation. It may have further advantages for environmental safety and user security of a mobile filter device, since a reduced rate of substance exposure may eliminate or at least decrease the rate of cavity formation which may otherwise have resulted in spills of the stored substances. It may have further advantages for the lifetime and downtime of a mobile filter device, due to a reduced incidence rate for structural damage; moreover, should a structural damage occur it may be less detrimental and also be more easily repaired when compared to current state of art devices.

In some embodiments a mobile filter device for a corrosive substance may comprise at least one corrosion-resistant coating layer selected from the following list of coating materials: a vinyl ester resin, for example an epoxy vinyl ester resin.

In some embodiments the inner corrosion-resistant coating layer comprises the same material as the outer corrosion-resistant coating layer. In some preferred embodiments the inner corrosion-resistant coating layer consists of the same material as the outer corrosion-resistant coating layer; for example a vinyl ester resin; for example an epoxy vinyl ester resin. In some embodiments a mobile filter device for a corrosive substance may comprise at least two corrosion-resistant coating layers selected from the coating material list recited above. In some embodiments a mobile filter device for a corrosive substance may comprise at least two corrosion-resistant coating layers that comprise the same coating material selected from the coating material list recited above. In some embodiments a mobile filter device for a corrosive substance may comprise at least two corrosion-resistant coating layers, wherein an inner corrosion-resistant coating layer comprises a coating material selected from the list recited above, and wherein an outer corrosion-resistant coating layer comprises a coating material selected from the coating material list recited above different from the coating material selected for the inner corrosion-resistant coating layer.

In some embodiments a mobile filter device for a corrosive substance may comprise at least two corrosion-resistant coating layers, wherein an inner corrosion-resistant coating layer comprises a coating material structurally different from a coating material comprising an outer corrosion-resistant coating layer. In some embodiments a mobile filter device for a corrosive substance may comprise at least two corrosion-resistant coating layers, wherein an inner corrosion-resistant coating layer comprises a coating material structurally similar to a coating material comprising an outer corrosion-resistant coating layer.

In some embodiments a mobile filter device for a corrosive substance may comprise at least two corrosion-resistant coating layers, wherein an inner corrosion-resistant coating layer comprises a coating material with similar surface or chemical properties as a coating material comprising an outer corrosion-resistant coating layer. In some embodiments a mobile filter device for a corrosive substance may comprise at least two corrosion-resistant coating layers, wherein an inner corrosion-resistant coating layer comprises a coating material with different surface or chemical properties as a coating material comprising an outer corrosion-resistant coating layer.

Many of the coating materials listed above also provide a bonus of abrasion resistance, non-stick performance and chemical protection. However, precise material properties and thus surface properties may vary between different coating materials. For example, it may be beneficial to configure an outer coating layer with diminished anti-corrosion-resistant properties, yet with increased environmental abrasion resistance (e.g., rain-, wind-, water-, scratch-resistance, etc.); likewise, an inner coating layer may then be preferably configured to offer maximal corrosion resistance and less environmental abrasion resistance.

In some embodiments a mobile filter device for a corrosive substance may be characterized in that the composite material consists of bisphenol-based epoxy vinyl ester resin An exemplary embodiment with regards to the material combinations of a mobile filter device may be found in Example 2.

The inventors have found that certain composite materials may offer an optimal balance between structural properties (e.g. rigidity, resilience, elasticity, etc.) and structural dimensions (e.g. weight, thickness, volume, etc.). Moreover, certain composite materials may offer an optimal balance between the aforementioned properties and production costs and timings of the mobile filter device.

Polyester resins are a family of polymers that may be used as the primary component of a composite material for providing structural stability to a mobile filter device. Various polyester resins formulations exist and are usually designated by the principle raw material that determines the performance characteristics of the resulting polymer backbone. On the most basic level these resins may consist of an unsaturated polyester polymer dissolved in a crosslinking monomer and various additives. The characteristics of the polyester resin may be varied by the precise choice of additive types, volumes and timings of addition.

The inventors have found that polyester resins may provide a mobile filter device with a very sturdy and resilient backing that may offer a good balance between structural and chemical properties. Moreover, certain polyester resin were found to potentially match suitably with certain corrosion-resistant coating layers, which may lead to an overall improved surface adhesion of the coating layer to the container wall, and thus may improve the corrosion-resistant properties of the mobile filter device. Certain polyester resin combinations were found to adhere more strongly with certain corrosion-resistant coating layers than may be expected.

In some embodiments a mobile filter device for a corrosive substance may be characterized in that the composite material of the metal-free container wall is disposed between at least two coating layer. Preferably, the composite material of the metal-free container wall is disposed between an inner corrosion-resistant coating layer and an outer corrosion-resistant coating layer. This allows for providing structural stability to the tank container and/or the coating layers.

In some other embodiments a mobile filter device for a corrosive substance may be characterized in that a polymer or polymer derivative may be disposed between at least two coating layers, an inner corrosion-resistant coating layer and outer corrosion-resistant coating layer, and may be further configured for providing a mechanical stability to the coating layers.

Since coating materials may be generally selected primarily for their chemical or surface properties, certain coating materials may display reduced structural properties. Additionally, thin coating layers may often be preferred to reduce costs, thus further reducing their structural properties. By disposing a polymer or preferably a polyester resin between two coating layers a composite material may be obtained displaying resilient structural properties and also corrosion-resistant surface properties that may be suitable for a corrosive substance.

The mobile filter device can further be adapted to provide additional mechanical and structural resistance in case the composite container wall may be exposed to unexpected or excessive stress factors resultant from, for example, excessive tilting of the device, collapsing structures, transport device collisions, human errors, and so on. The increased mechanical resistance may be achieved by further comprising the composite material with at least one reinforcement material or method as described herein; preferably carbon of fiberglass reinforcements. Many of these methods may not be suitable or compatible with traditional metal walls.

In some embodiments a mobile filter device for a corrosive substance may further comprise at least one reinforcement material of the following list: fiberglass (e.g. E-Glass, S-Glass, C-Glass), carbon, textile, woven reinforcements, knitted reinforcements, chopped strand mat or chop reinforcements, continuous roving reinforcement, surface Veils, carbon veils and cores (e.g. end-grain balsa, styrene acrylonitrile (SAN) foam, polyvinyl chloride (PVC) foam and/or polyethylene terephthalate (PET) foam).

In some preferred embodiments a mobile filter device for a corrosive substance may further comprise a fiberglass reinforcement material (e.g. E-Glass, S-Glass, C-Glass). In some other preferred embodiments a mobile filter device for a corrosive substance may further comprise a carbon reinforcement material. In some other preferred embodiments a mobile filter device for a corrosive substance may further comprise a carbon reinforcement material and a fiberglass reinforcement material.

Reinforcement materials may be combined with polymer matrix systems in a variety of forms to create laminates used in corrosion-resistant applications. Different reinforcement materials may be adapted to particular polymer processing methods, or the polymer processing method may be adapted around a type of reinforcement material. Some reinforcement materials may provide better mechanical properties, but add additional production or material cost. Certain reinforcement materials may further require specific processing shapes or molds; for example, honeycomb, squares, knitting directions (e.g., crisscross, diagonal, etc.). There may be economical reinforcement materials, however in general these may be found lacking mechanical strength. Therefore, managing these production variables may require an in depth review of the specifications and requirements of the mobile filter device, such as, determining the inner and outer pressure the container walls may be exposed to.

The inventors have found that certain reinforcement materials may be preferred for the production of a mobile filter device, in particular fiberglass and carbon have been found to offer an optimal balance between improving the structural properties of the tank container wall without, or to acceptable levels, negatively affecting the mobile filter device dimensions (e.g., device size and weight, container wall thickness, available inner volume, etc.). To further improve the structural properties of the tank container wall reinforcement materials may be added to the composite material..

In some embodiments a mobile filtering device for a corrosive substance comprises a filter adapted for filtering of a corrosive substance according to a processing method from the following list: air or gas scrubbing, biological filtering, adsorption beds, sand filtration, two layer filtration, resin ion exchange, incineration, molecular filtration and/or carbon filtering. In some preferred embodiments a mobile filtering device for a corrosive substance comprises an active carbon filter, adapted for filtering of a corrosive substance. Commonly, the filter comprises at least one filtering screens and at least one filtering tube disposed within the tank container.

One major industrial application involves use of filters in further processing and purification of corrosive and/or highly reactive substances. The listed processing methods are commonly used and known in the art. Generally the processing methods employ a variety of chemicals and organic chemicals, or mechanical and electro-mechanical components (e.g., membranes, cathodes and anodes, etc.) that the substances are led through (i.e. flow), either actively or passively, to purify or purge the substance of corrosive elements. The excessive build-up of purged substances can however adversely affect the filtering quality and physical properties of the filters; thus maintenance may be necessary.

Active carbon filtering, also known as activated carbon filtering, or alternatively activate(d) charcoal or activate(d) coal, is a form of carbon processed to have small, low-volume pores that increase the surface area available for adsorption or chemical reactions. Due to its chemical properties and enhanced adsorption it is particularly well suited for the filtering of corrosive and/or highly reactive substances.

In some embodiments a mobile filter device for a corrosive substance comprises a filter disposed within the tank container. In some embodiments a mobile filtering device for a corrosive substance comprises a filter disposed along the lateral direction of the tank container, said filter further comprising at least one filtering screen and filtering tube. In some embodiments a mobile filter device for a corrosive substance comprises a filter disposed along the horizontal direction of the tank container. In some preferred embodiments a mobile filter device for a corrosive substance comprises a filter disposed along the longitudinal direction of the tank container. Longitudinal direction refers to distance extending in the direction of the length of a tank container; commonly for a cylindrically shaped tank this is the greatest distance as compared to the lateral (i.e. transversal) or vertical direction. It is the preferred displacement direction for active carbon filtering to enhance, or maximize the filtering properties due to an improved flow of the substance.

The advantage of having a longitudinally disposed filter is that the mobile filter device may be discharged of the corrosive substance stored within though the force of gravity. In other words, when the discharge release is opened, preferably when the mobile filter device is lifter or tilted, the corrosive substance will passively exit mobile filter device. This prevents the need for using secondary devices, such as suction trucks or system, to provide an external pressure or flow to actively drain the mobile filter device.

Generally speaking, a filter is a porous device for removing impurities or solid particles from a liquid or gas passed through it. It may be permanently or non- permanently affixed to an object; in particular to a tank container wall. Certain filtering methods may rely on a specific positioning and orientation to maximize the filtering properties due to an improved flow of the substance. Other filtering methods may offer their expected functionality regardless of the orientation or relative positioning. It may be assumed those skilled in the art may adapt and dispose the filter to achieve optimal filtering properties in the present invention. By having the filter disposed from top to bottom within the mobile filter device, the filtering may be performed passively using the force of gravity.

The inventors have found that a mobile filtering device for a corrosive substance may preferably be placed in an upright position with its long side (i.e. height) upstanding, preferably perpendicular or almost perpendicular with the ground plane. This positioning allows the corrosive or filtered substance to discharge from the mobile filter device gravitationally, i.e. under the influence of gravitation. The benefit of this positioning is that no active force must be supplied to drive the discharge process, thereby reducing costs. This may also be achieved by tilting the mobile filter device. Similarly, the filter may also be replaced using the same concept. For example, for an active carbon filter new carbon may be added from the top of the device, through the manhole; thereby increasing the speed, safety and ease-of-use of the mobile filter device; especially if this process is performed on-site on an installed mobile filter device. Alternatively, the mobile filter device may also be drained hydraulically through the use of an external hydraulic device. The benefit of this method is that it may be drained faster in comparison with the former method. An exemplary embodiment with regards to the use and processing of a mobile filter device_may be found in Example 4.

In some embodiments a mobile filtering device for a corrosive substance comprises a mount dismountably affixed to the tank container. In some embodiments a mobile filtering device for a corrosive substance comprises a mount that may be attached or detached to the tank container whenever manipulation of the mobile filter device may occur. In some embodiments a mobile filtering device for a corrosive substance comprises a mount that may be joined, fixed, fastened, linked, tied, bound, strapped chained or anchored to the tank container whenever manipulation of the mobile filter device may occur. Such dismountably affixed or attachable mounts may be shared amongst multiple mobile filter devices whenever a need arises to provide manipulation or transport of at least one of the mobile filter devices. In some preferred embodiments a mobile filtering device for a corrosive substance comprises a mount non-dismountably affixed to the tank container. In some other preferred embodiments a mobile filtering device for a corrosive substance comprises a mount non-dismountably affixed to the tank container by means or fasteners; for example, latches, screws, bolts, locks, clamps, rivets, buttons, etc. In some other preferred embodiments a mobile filtering device for a corrosive substance comprises a mount non-dismountably affixed to the tank container by having at least a part of the mount embedded inside the tank container or the tank container wall; however, additional precautions may be necessary not to compromise the functionality of the corrosion-resistant elements, such as the (inner and/or outer) coating layers.

In some embodiments a mobile filtering device for a corrosive substance comprises a mount configured to attach, latch, lock, link, couple and/or connect with a complementary transport mount comprised upon a transport device. In some embodiments a mobile filtering device for a corrosive substance comprises a mount dismountably affixed to the tank container and further configured to repeatedly attach, latch, lock, link, couple and/or connect with a complementary transport mount comprised upon a transport device. In some preferred embodiments a mobile filtering device for a corrosive substance comprises a mount non-dismountably affixed to the tank container and further configured to attach, latch, lock, link, couple and/or connect with a complementary transport mount comprised upon a transport device.

The inventors have found that a motorized vehicle equipped with a lifting device is most suitable for placing or removing the mobile filter device from a location. Such a lifting device may be a hydraulic or mechanical system, or any system capable of providing sufficient power to lift or manipulate a mobile filter device. Additionally, the lifting device is preferably capable of placing the mobile filter device in an upright position on an on-site location and also capable of manipulating the mobile filter device to a level position for transport on top of the transport device. The use of a mount and a complementary mount is commonly known in the art and may comprise various models and techniques recognized by those skilled in the art.

Generally speaking, a mount is a support dismountably or non-dismountably affixed to an object, in particular a mobile filter device's tank container, further configured to offer stability to the mobile filter device while it is manipulated, mounted or transported. Preferably the mount is affixed to the tank container and covers at least a part of the tank container wall, or fully encompasses the tank container wall. A mount that is non-dismountably affixed may offer improved stability and durability above a mount that is dismountably affixed. A mount that is non-dismountably affixed and at least partially embedded into the tank container may offer improved stability and durability above a mount that is dismountably affixed against the tank container.

A complementary mount is a support dismountably or non-dismountably affixed to an object, in particular a transport device configured to (i) offer stability to the mobile filter device while it is manipulated, mounted or transported and (ii) establish the mobile filter device remain mounted upon the transport device, either through a connection with the mount of with the mobile filter device itself. The mount and complementary mount may be a structure, portable or non-portable, on which the mobile filter device unit may be mounted, such as for example a frame. The mount and complementary mount may be a structure with moving axes, motorised or non-motorised, where the mobile filter device probe unit is mounted on the end of said axes, dependent to all other axes, such as for instance a robot, a loading arm, a crane, or a tilting device. These last types of mechanical mounts may further have the possibility to record the position and/or the rotation of the mobile filter device, using for instance, sensors or encoders.

Preferably, the mount and complementary mount may comprise a complementary mechanism configured to offer a repeatable dismountable connection between each other.

This mechanism may achieve the connection through various means, such as, attachment, latching, locking, linking, coupling, etc. Alternatively, other less conventional means of establishing a connection may also provide the same purpose, such as binding the mobile filter device with a rope, using magnetic connections, or stacking mobile filter devices; however these alternatives generally provide less secure transport conditions and may therefore be less preferred to achieve the present invention's purposes of providing a more safe and secure means of transporting corrosive substances.

The mount may be produced using various materials, such as a composite material similar to the container wall, but also a different material such as a metal, a metal alloy, etc.; as long as the material may provide sufficient structural stability to warrant the presented purposes. There may be a difference in the expansion coefficient between a composite material, used for the tank container, and a metal or metal alloy, used for the mount. In a preferred embodiment the mount is a metal mount, wherein a potential expansion of the tank container is accounted for in the design for the metal mount. An exemplary embodiment with regards to the transportation (e.g. mounting, transport and placement) of a mobile filter device may be found in Example 5.

In some embodiments a mobile filter device for a corrosive substance, in particular the tank container has a rectangular shape. In some embodiments a mobile filter device for a corrosive substance, in particular the tank container, has a geometric shape; preferably suitable for storing of corrosive substances and transport using a transport device; for example a polygonal or the like; for example spherical or the like. In some preferred embodiments a mobile filter device for a corrosive substance, in particular the tank container, has a cylindrical shape.

In general, a cylindrically shaped mobile filter device may offer the optimal durability and structural properties of a corrosive substance due to its shape. Also given the round shape no particular weak spots may be present in the mobile filter device, in comparison corners present in, for example, a rectangular shaped mobile filter device. Moreover, production of a tank container may be cheaper and faster due to the lack of cornered edges. However, a differently shaped mobile filter device may just as well achieve similar durability and structural properties with proper design choices.

In some embodiments a mobile filtering device for a corrosive substance comprises a cylindrical shape and is characterized by a total length of at least 2.0 m to at most 20.0 m; preferably at least 4.0 m to at most 15.0 m; more preferably at least 6.0 m to at most 10.0 m; most preferably at least 7.0 m to at most 9.0 m; for example 8.5 m.

In some embodiments a mobile filtering device for a corrosive substance comprises a cylindrical shape and is characterized by an inner diameter of at least 0.5 m to at most 5.0 m, preferably at least 1.0 m to at most 4.5 m; more preferably at least 1.5 m to at most 3.5 m; most preferably at least 2.0 m to at most 3.0 m; for example 2.2 m.

In some embodiments a mobile filtering device for a corrosive substance comprises a cylindrical shape and is characterized by an outer diameter of at least 0.5 m to at most 5.1 m, preferably at least 1.0 m to at most 4.6 m; more preferably at least 1.5 m to at most 3.6 m; most preferably at least 2.0 m to at most 3.1 m; for example 2.4 m.

In some embodiments a mobile filtering device for a corrosive substance comprises a cylindrical shape and is characterized by a wall thickness, defined as half the difference between the outer diameter and the inner diameter, of at least 1.0 cm to at most 20.0 cm; preferably at least 2.5 cm to at most 15.0 cm; more preferably at least 4.0 cm to at most 10.0 cm; most at least 5.0 cm to at most 7.5 cm; for example 5.5 cm.

In some embodiments a mobile filtering device for a corrosive substance comprises a cylindrical shape and is characterized by an inner volume of at least 1.0 m³ and at most 50.0 m³, preferably at least 5.0 m³ to at most 40.0 m³; more preferably at least 10.0 m³ to at most 30.0 m³; most preferably at least 22.5 m³ to at most 27.5 m³; for example 24.5 m³.

In some embodiments the at least one inner corrosion-resistant coating layer is characterized by a thickness of at least 1.0 mm to at most 10.0 mm; preferably at least 2.5 mm to at most 7.5 mm; more preferably at least 3.0 mm to at most 7.0 mm; most preferably at least 4.0 mm to at most 6.0 mm; most preferably at least 4.5 mm to at most 5.5 mm; for example 5.0 mm. In some embodiments the at least one outer corrosion-resistant coating layer is characterized by a thickness of at least 1.0 mm to at most 10.0 mm; preferably at least 2.5 mm to at most 7.5 mm; preferably at least 2.5 mm to at most 7.5 mm; most preferably at least 2.5 mm to at most 7.5 mm; for example 5.0 mm.

In some embodiments the at least one inner corrosion-resistant coating layer has the same thickness as the at least one outer corrosion-resistant coating layer; the same thickness defined as being within the production error margin of ± 5% thickness; for example 95% or 105%. In some embodiments the coating layer is uniform across the tank container; the coating layer thickness is the same. Alternatively the coating layer may have a varying thickness across the tank container.

In some preferred embodiments a mobile filtering device for a corrosive substance comprises a cylindrical shape and is characterized by: a total length of about 8.5 m; an inner diameter of about 2.2 m; an outer diameter of about 2.4 m; a wall thickness of about 5.5 cm; and an inner volume of about 24.2 m³. An exemplary embodiment with the dimensions and operating properties of a mobile filter dimensions may be found in Example 3.

The inventors have found that such a preferred embodiment of a mobile filter device may be particularly well suited for receiving, storing, handling, filtering and/or transporting a corrosive substance, notably for larger volumes (i.e, above 20 m³) of a corrosive substance. They have found that these parameters may offer an optimal balance between the volumes of corrosive substances produced by the industry and the timings to offer a daily transport of the produced and received corrosive substances. On one hand, similar mobile filter devices that are characterized by lower dimensions, and thus smaller inner volumes, may be filled up too quickly and may further require transports to occur more frequently resulting in increased transport and handling costs. Additionally, more frequent handling and transport may result in a higher chance of human error or natural deterioration of the mobile filter device. On the other hand, similar mobile filter devices that are characterized by greater dimensions, and thus greater inner volumes, may be too cumbersome for, or even incompatible with existing mounts and transport devices and may further increase the handling and transport timings and thus also costs. Additionally, an increased difficulty in handling may increase the occurrence rate of human error or natural deterioration of the mobile filter device. Moreover, due to the increased size and weight, any occurring errors may lead to more significant consequences such as damage to the mobile filter device, the transport device or the user.

In some embodiments a mobile filtering device for a corrosive substance is configured to withstand an inner pressure of at least 0 bar to at most 15 bar; preferably at least 2 bar to at most 10 bar; more preferably at least 3 bar to at most 7 bar; most preferably about 5 bar.

Storing, transporting and filtering of corrosive substances may result in the buildup of inner pressure. Therefore the mobile filter device, in particular the walls of the container walls, may be adapted for resisting the inner pressure. For the above described preferred embodiment the present inner pressure when a corrosive substance is received, stored and filtered may be between 3 bar to 7 bar, likely about 5 bar.

The inventors have found that a mobile filter devices that displays an optimized dimension to inner volume and weight ratio; which is improved or at least comparable to mobile filter devices produced according to the state of art metal wall containers, yet, demonstrates a structural and coating layer stability, functionality, manipulation and transport safety, and operational lifetime and downtime exceeding that which may be available with the state of art devices. Specifically, according to a most preferred embodiment, the mobile filter device as described herein is particularly well suited for corrosive substances with a volume of about 24 m³; and is configured to withstand an inner pressure of about 5 bar.

In some embodiments a mobile filter according to an embodiment of the present invention may be used for receiving, storing, handling, filtering and/or transporting is suitable for a corrosive material of the following list: nitric acid, Succinic acid, lactic acid, hydrochloric acid, sulfuric acid, alkaline contents, MCB in HCL and toluene or xylene in alkaline solutions.

The inventors have found that certain composite materials and coating layers may offer optimal chemical or surface properties (e.g. corrosion resistance, abrasion resistance, etc.) with improved structural properties (e.g. resistance to fractures, crack formation and propagation, adhesion, etc.) for receiving, storing, handling, filtering and/or transporting a corrosive material. In particular for receiving, storing, handling, filtering and/or transporting of the above listed corrosive materials.

Moreover, certain composite materials may offer an optimal balance between the aforementioned properties and production costs and timings of the mobile filter device.

In some embodiments a mobile filter according to an embodiment of the present invention may be used for transporting the mobile filter device using transport device, such as a truck, a forklift, a car, a train, a plane, etc. Since the invention as described herein may be configured to provide an improved safety and security as compared to state of art devices, the invention may thus be transported more safely and securely using various transport devices; provided that said transport devices may comprise sufficient and suitable space for loading or mounting the mobile filter device, and are capable of providing sufficient force for transporting the weight of the mobile filter device.

In a further aspect the present invention provides for a use of a mobile filter devicecomprising: a tank container, configured for receiving, storing and discharging of the corrosive substance; a filter, disposed within the tank container and configured for processing of the corrosive substance; a mount, adapted for repeatable dismountable connection to a transport device; characterized in that the tank container comprises a metal-free container wall, the container wall comprising a composite material coated with at least one inner corrosion-resistant coating layer disposed along the interior of the container wall, said coating layer being configured for storing a corrosive substance; wherein the composite material of the metal-free container wall consists of a bisphenol-based epoxy vinyl ester resin and at least one reinforcement material, and the coating layer consists of a novolac-based vinyl epoxy vinyl ester resin and at least one reinforcement material.

In some embodiments the use of the mobile filter device is for receiving, storing, handling, filtering and/or transporting a corrosive substance of the following list: nitric acid, Succinic acid, lactic acid, hydrochloric acid, sulfuric acid, alkaline contents, MCB in HCL and toluene or xylene in alkaline solutions.

In some embodiments the use of the mobile filter device is for processing a corrosive material according to method from the following list: air or gas scrubbing, biological filtering, adsorption beds, sand filtration, two layer filtration, resin ion exchange, incineration, molecular filtering and/or carbon filtering.

In a further aspect the present invention provides a method for transporting a mobile filter device, the method comprising the steps of
(a) providing a mobile filter device according to any embodiment(s) as described herein;
(b) positioning a transport device near and/or adjacent to the mobile filter device; preferably near and/or adjacent to a mount of the mobile filter device;
(c) loading the mobile filter device onto the transport device;
(d) transporting the mobile filter device with the transport device.

In some embodiments the transport device comprises a complementary mount and step (b) of the method further comprises: establishing a connection between the mount of the mobile filter device and the complementary mount of the transport device; preferably a repeatable dismountable connection. The connection may be performed using various methods, such as, attachment, latching, locking, linking, coupling, etc. An exemplary model of the method is provided in Examples 4 and 5.

In some embodiments the loading is performed by tilting of the mobile filter device onto the transport device. This allows to easily place an upright mobile filter device (i.e. the long side of the mobile filter device being perpendicular to the ground) to a level position (i.e. the long side of the mobile filter device being parallel to the ground and the transport device).

In some embodiments the method further comprises step (e): placement of the mobile filter device. In particular, the placement comprises the step of unloading the mobile from the transport device; preferably by tilting the mobile filter device from a level position onto an upright position; and additionally, disconnecting the mobile from the securing means and/or complementary mount.

In some embodiments the method is for receiving, storing, handling, filtering and/or transporting a corrosive substance of the following list: nitric acid, Succinic acid, lactic acid, hydrochloric acid, sulfuric acid, alkaline contents, MCB in HCL and toluene or xylene in alkaline solutions.

In some embodiments the method is for processing a corrosive material according to method from the following list: air or gas scrubbing, biological filtering, adsorption beds, sand filtration, two layer filtration, resin ion exchange, incineration, molecular filtering and/or carbon filtering.

### EXAMPLES

### Example 1: Configuration of a mobile filter device.

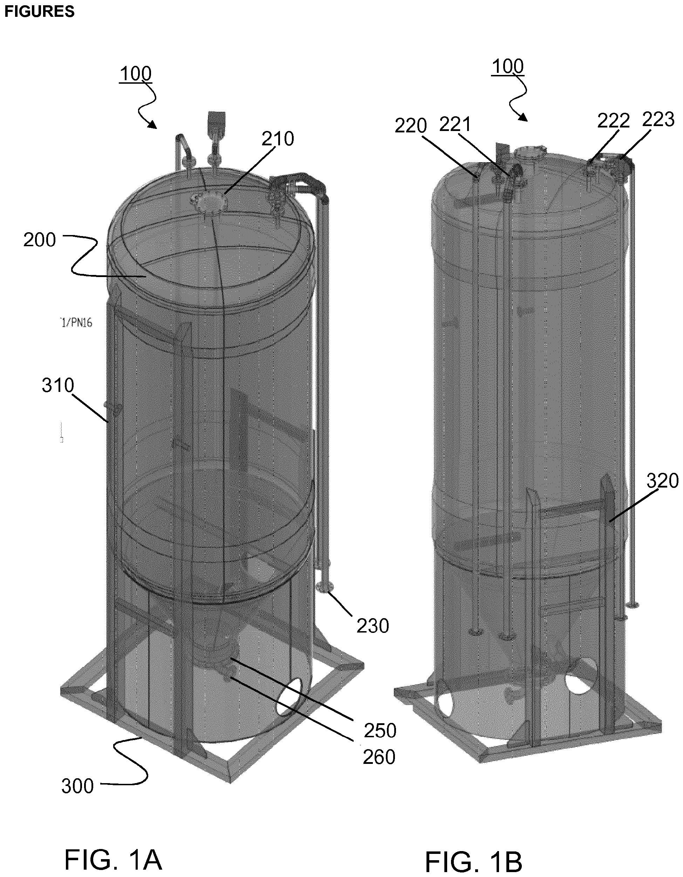

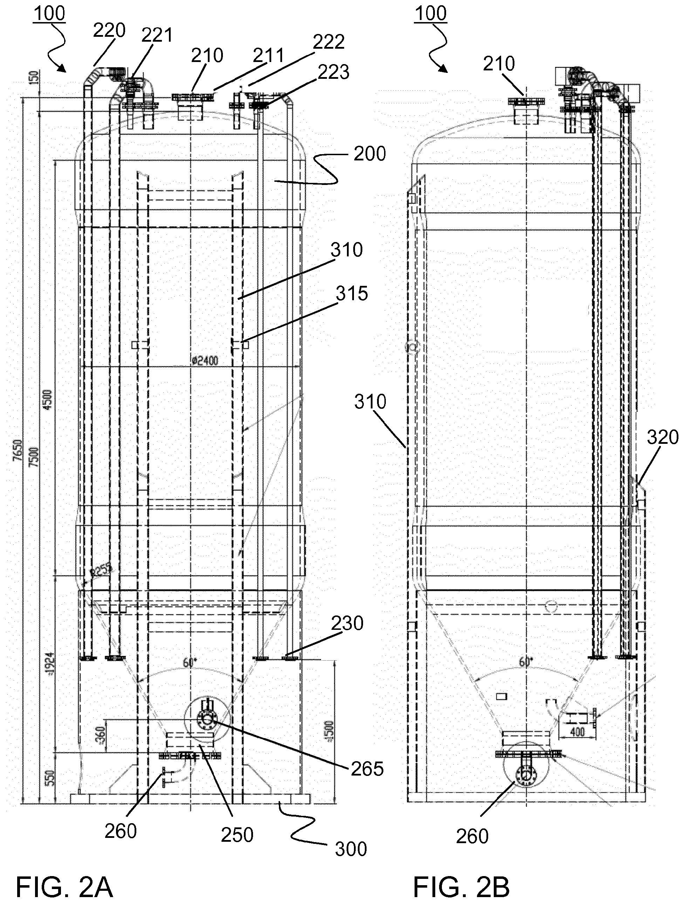

A mobile filter device as described by the present invention may be manufactured in different embodiments. As such, every exemplary embodiment may further comprise various elements known in the art or, likewise, comprise various adaptations of elements known in the art. Illustrations of an example of a mobile filter device (100) comprising examples of various elements that may be comprised in a mobile filter (100) as described herein, are presented in Figs. 1 and 2; showing an illustration from two different viewing angles. Typically, a mobile filter device (100) comprises a cylindrically shaped tank container (200) configured for providing a filtering of the corrosive substance. For example, these configurations may further include, a manhole (210), which may serve as an opening to an inner section of the mobile filter device (100) or as or an access point for performing inspections, maintenance, repairs or adjustments to the mobile filter device (100); a manhole hinge (215), which may serve as a movable joint or mechanism on which a manhole (250) swings as it opens and closes; a series of pipes for various purposes such as gas inlets or outlets, most commonly including: a (over)pressure valve (220) or a pressure relief valve, which may be used to control or limit the inner pressure in a mobile filter device (100) which may build up as a result from a process upset, instrument or equipment failure, fire or user mishandling; an inlet pipe (221), for filling the mobile filter device (100); a vacuum pipe (222), for providing vacuum to the mobile filter device (100); a vent pipe (223), for venting the mobile filter device (100); one or more pipe exits (230), for connecting each of the former series of pipes with their respective (industrial) device or connection; a bottom discharge (250), which may serve as an exit point for quickly discharging a corrosive substance from the mobile filter device (100); a bottom discharge pipe (260), for selectively discharging and guiding a corrosive substance from the mobile filter device (100).

The mobile filter device further comprises a mount (300), which is adapted for repeatable dismountable connection of a mobile filter device (100) to a transport device (400); a mount connector (310), which may serve as a connection point for affixing said mount (300) to a complementary mount (410) connected to the transport device (400); sets of mount connector locks (315), which may establish a secure connection by locking the mount connector (310) to a complementary mount (410); and a front mount (320), which may provide additional stability and security during handling or manipulation of the mobile filter device (100).

Inside the mobile filter device (100), i.e., inside the tank container (200) a filter is disposed which is configured for processing a stored corrosive substance; for example an active carbon filter.

### Example 2: Material combinations of a mobile filter device.

A mobile filter device as described in the present invention may be manufactured with different materials. In an example, a mobile filter device has a cylindrical shape. To better illustrate the example, a reference is made to Fig. 1, which demonstrates an exemplary embodiment of a mobile filter device from two different viewing angles.

For the purposes of the example, the mobile filter device (100) comprises the following materials:
- The structural laminate which serves as the inner wall produced from Bisphenol a epoxy vinyl ester and ECR-glass fibers.
- The top coat which holds the manhole (210) produced from Bisphenol a epoxy vinyl ester and ECR-glass veil.
- An inner corrosion-resistant coating layer produced from a Novolac based epoxy vinyl ester resin, 2 carbon veils, 2 C-glass veils, and ECR-glass fibers.

The exemplary materials undergo a post-curing process during production.

For the purposes of the example, the mount (300) consists of steel, wherein the steel mount is processed into the tank container to provide an improvement in stability and rigidity. Moreover, any potential expansion of the tank container due to an increment in inner pressure is accounted for in the design of the steel mount.

### Example 3: Dimensions and operating properties of a mobile filter device.

A mobile filter device (100) as described in the present invention may be manufactured from different materials and may thus be obtained in different dimensions for various operating parameters. In an example, a mobile filter device has a cylindrical shape. To better illustrate the example, a reference is made to Fig. 2, which demonstrates an exemplary embodiment of a mobile filter device (100) from two different viewing angles.

For the purposes of the example, the mobile filter device (100) is characterised by the following dimensions.
- a total length of 8600 mm;
- a tank container length of 8500 mm;
- a cylindrical length of 5417 mm;
- a funnel shaped bottom of 1924 mm;
- a protruding length of the manhole of 150 mm;
- a distance of the bottom discharge to the structures bottom of 550 mm;
- an inner diameter of 2200 mm;
- an outer diameter of 2400 mm;
- a wall thickness of 5.5 mm;
- a diameter of the upper manhole of 600 mm;
- a inner volume of 24.2 m³.
- an angle formed by the funnel shaped bottom of about 60° degrees;

For the purposes of the example, the above described mobile filter is configured for operation under the following parameters:
- an operating temperature of 40° C;
- an operating pressure of 5 bar;

### Example 4: Use and processing of a mobile filter device.

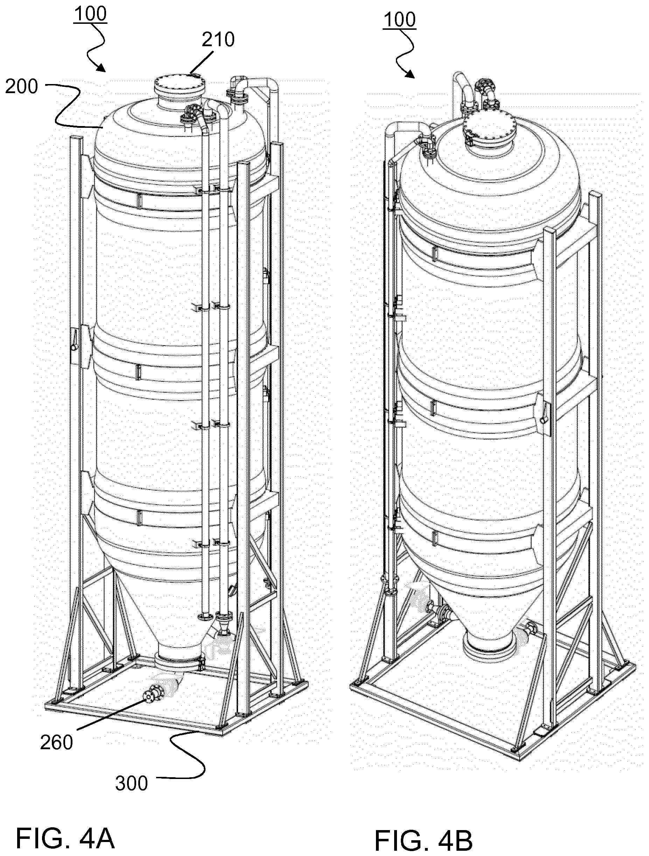

A mobile filter device (100) as described by the present invention may be used for filtering of corrosive substances on various industrial production facilities or (corrosive) substance management facilities. To better exemplify how a mobile filter device (100) may filter, a reference is made to Figs. 2 and 4, which illustrate different examples of a mobile filter device (100) after there are installed and ready to perform the filtering; each illustration is viewed from two different viewing angles, namely (a) a first perspective and (b) a second perspective obtained through rotation of 180° and 90°, respectively.

After transport with a a transport device (400), as described further in Example 5, the mobile filter device (100) is placed in an upright position with its long side (i.e. height) upstanding, preferably perpendicular or almost perpendicular with the ground plane.

The corrosive substance may then be supplied through at least one inlet pipe, which will then proceed to fill the inside of the tank container (200) wherein the filter is placed.

After filtering, the filtered substance may then be discharged or drained through at least one exit pipe or discharge pipe. The filtered substance will discharge the mobile filter device (100) gravitationally, i.e. under the influence of gravitation. The benefit of this method is that no active force must be supplied to drive the discharge process, thereby reducing costs. Alternatively, the mobile filter device (100) may also be drained hydraulically through the use of an external hydraulic device. The benefit of this method is that it may be drained faster in comparison with the former method.

Similarly, the filter may also be replaced gravitationally, thereby improving the cost and ease-of-use of the mobile filter device (100).

### Example 5: Transport of a mobile filter device.

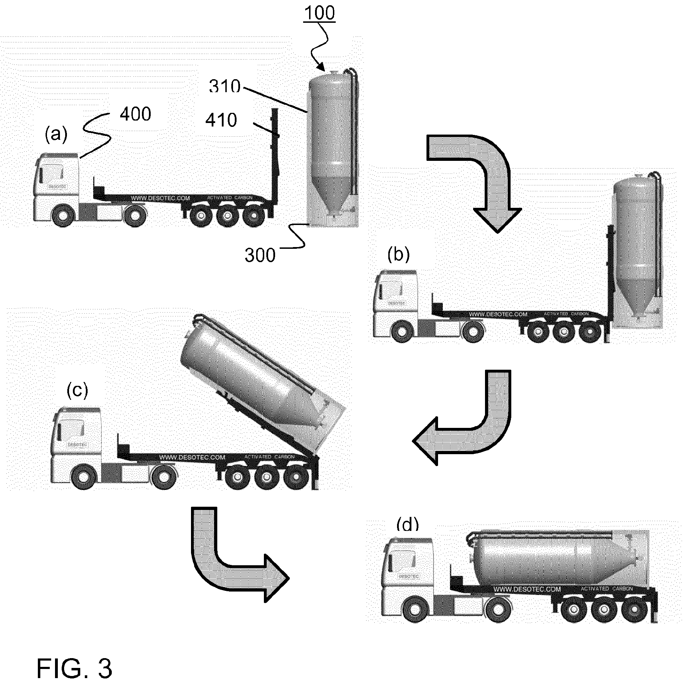

A mobile filter device (100) as described by the present invention may be further configured for transport between various industrial production facilities or (corrosive) substance management facilities. To better exemplify how a mobile filter device (100) may be transported a reference is made to Fig. 3, which illustrates an example of a mobile filter device (100) and an example of a transport device (400).

This transport may be performed using various transport devices (400), such as, a forklift, a boat, a train, etc.; however, in the current example the transport device (400) is a truck configured for safe and secure transport of a mobile filter device (100) which further comprises a complementary mount connector adapted for repeatable dismountable connection to a mobile filter device (100).

As the first operational step **(a),** a transport device (400) approaches a mobile filter device (100) ready to be loaded with its complementary mount connector (410) readied, which is positioned at the far end part of the transport device (400).

Next **(b),** the transport device (400) establishes a connection with the mobile filter device (100). This connection may be performed using various methods, such as, attachment, latching, locking, linking, coupling, etc.; however, in the current example a repeatable connection is established by locking the complementary mount connector (410) to a mount connector (310) which is placed on one side of the mobile filter device (100) forming part of the mount (300) that is non-dismountably affixed to a tank container (200) or the tank container (exterior) wall. Upon establishing a secure connection between the mount (300) and the transport device (400), i.e., by locking the mount connector (310) and the complementary mount connector (410) using sets of mount connector locks (315), the mobile filter (100) may be safely lifted by the transport device (400).

After connection **(c),** the mobile filter (100) may be loaded onto the transport device (400). In the current example, the mobile filter (100) is slowly tilted after the lifting process to avoid any unnecessary stress factors to affect the mobile filter device. Once the manipulation is completed the mobile filter (100) will reside in a level position on top of the transport device (400), with its long side (i.e. height) along the length of the transport device (400), preferably parallel or almost parallel with the ground plane. Afterwards, additional measures or methods may be performed to further secure and stabilize the mobile filter (100); for example, additional fasteners may inserted, locks may be closed, and/or straps may be attached. Lastly **(d),** the mobile filter device (100) may be transported in said level position on top of the transport device (400) to reach its destination; such as an industrial production facility.

## Claims

1. Mobile filter device (100) for a corrosive substance selected from organic solvents in an alkaline or acid solution and/or combinations thereof, the mobile filter device (100) comprising:
- a tank container (200), configured for receiving, storing and discharging of the corrosive substance;
- a filter, disposed within the tank container and configured for processing of the corrosive substance;
- a mount (300), adapted for repeatable dismountable connection to a transport device (400);
**characterized in that** the tank container (200) comprises a metal-free container wall, the container wall comprising a composite material coated with at least one inner corrosion-resistant coating layer disposed along the interior of the container wall, said coating layer being configured for storing a corrosive substance;
wherein the composite material of the metal-free container wall consists of a bisphenol-based epoxy vinyl ester resin and at least one reinforcement material, and the coating layer consists of a novolac-based vinyl epoxy vinyl ester resin and at least one reinforcement material.

2. The mobile filter device (100) according to claim 1, wherein the composite material of the metal-free container wall is coated with at least one outer corrosion-resistant coating layer disposed along the exterior of the container wall.

3. The mobile filter device (100) according to claim 2, wherein the inner corrosion-resistant coating layer comprises the same material as the outer corrosion-resistant coating layer; preferably consists of the same material.

4. The mobile filter device (100) according to any of claims 1 to 3, wherein the composite material further comprises at least one reinforcement material of the following list: glass fibers (e.g. E-glass, S-glass, C-Glass, ECR-glass), carbon, textile, woven reinforcements, knitted reinforcements, chopped strand mat or chop reinforcements, continuous roving reinforcement, surface Veils (e.g. glass veils), carbon graphite, carbon veils and cores (e.g end-grain balsa, styrene acrylonitrile (SAN) foam, polyvinyl chloride (PVC) foam and/or polyethylene terephthalate (PET) foam); preferably carbon veils, C-glass veils, ECR(electronic corrosion-resistant)-glass fibers, ECR(electronic corrosion-resistant)-glass veil.

5. The mobile filter device (100) according to any of claims 1 to 4, wherein the composite material of the metal-free container wall consists of a bisphenol-based epoxy vinyl ester resin and ECR-glass fibers; and the at least one inner corrosion-resistant coating layer consists of a Novolac based epoxy vinyl ester resin, 2 carbon veils, 2 C-glass veils, and ECR-glass fibers.

6. The mobile filter device (100) according to any of claims 1 to 5, wherein the filter is adapted for processing a corrosive material according to a filtration method selected from the following list:biological filtering, adsorption beds, sand filtration, two layer filtration, resin ion exchange, molecular filtering and/or carbon filtering.

7. The mobile filter device (100) according to any of claims 1 to 6, wherein the filter is an active carbon filter.

8. The mobile filter device (100) according to any of claims 1 to 7, wherein the mount (300) is non-dismountably affixed to the tank container (200).

9. The mobile filter device (100) according to any of claims 1 to 8, wherein the mount (300) is configured to repeatedly attach, latch, lock, link, couple and/or connect with a complementary transport mount (410) comprised upon the transport device (400).

10. The mobile filter device (100) according to any of claims 1 to 9, wherein the tank container has a cylindrical shape and is **characterized by** any one of the following parameters:
- a total length of at least 4.0 m to at most 15.0 m, more preferably at least 6.0 m to at most 10.0 m, most preferably at least 7.0 m to at most 9.0 m; for example 8.5 m;
- an inner diameter of at least 1.0 m to at most 4.5 m, more preferably at least 1.5 m to at most 3.5 m, most preferably at least 2.0 m to at most 3.0 m; for example 2.2 m;
- an outer diameter of at least 1.0 m to at most 4.6 m, more preferably at least 1.5 m to at most 3.6 m, most preferably at least 2.0 m to at most 3.1 m; for example 2.4 m;
- a wall thickness, defined as half the difference between the outer diameter and the inner diameter, of at least 1.0 cm to at most 20.0 cm; preferably at least 2.5 cm to at most 15.0 cm; more preferably at least 4.0 cm to at most 10.0 cm; most preferably at least 5.0 cm to at most 7.5 cm; for example 5.5 cm;
- an inner volume of at least 1.0 m³ and at most 40.0 m³, preferably at least 10.0 m³ to at most 35.0 m³; more preferably at least 20.0 m³ to at most 30.0 m³; most preferably at least 22.5 m³ to at most 27.5 m³; for example 24.5 m³.

11. The mobile filter device (100) according to any of claims 1 to 10, wherein the corrosion-resistant coating layer is **characterized by** a thickness of at least 1.0 mm to at most 10.0 mm; preferably at least 2.5 mm to at most 7.5 mm; more preferably at least 3.0 mm to at most 6.0 mm; most preferably at least 4.0 mm to at most 5.0 mm; for example 5.0 mm.

12. The mobile filter device (100) according to any of claims 1 to 11, wherein the tank container (200) is configured to withstand an inner pressure of at least 0 bar to at most 15 bar; preferably at least 2 bar to at most 10 bar; more preferably at least 3 bar to at most 7 bar; most preferably at least 4 bar to at most 6 bar; for example 5 bar.

13. Use of a mobile filter device (100) according to any one of claims 1 to 12 for receiving, storing, handling, filtering and/or transporting a corrosive substance of the following list: nitric acid, Succinic acid, lactic acid, hydrochloric acid, sulfuric acid, alkaline contents, mono chloro benzene (MCB) in hydrochloric acid (HCL), and toluene or xylene in alkaline solutions.

## Patentansprüche

1. Mobile Filtervorrichtung (100) für eine korrosive Substanz ausgewählt aus organischen Lösungsmitteln in einer alkalischen oder sauren Lösung und/oder Kombinationen davon, wobei die mobile Filtervorrichtung (100) umfasst:
- einen Tankbehälter (200), der zum Annehmen, Lagern und Austragen der korrosiven Substanz ausgestaltet ist;
- einen Filter, der innerhalb des Tankbehälters angeordnet ist und zum Verarbeiten der korrosiven Substanz ausgestaltet ist;
- eine Halterung (300), die zum wiederholbaren demontierbaren Verbinden mit einer Transportvorrichtung (400) vorgesehen ist;
**dadurch gekennzeichnet, dass** der Tankbehälter (200) eine metallfreie Behälterwand umfasst, die Behälterwand ein Verbundmaterial umfasst, das mit mindestens einer inneren korrosionsbeständigen Beschichtungsschicht beschichtet ist, die entlang des Inneren der Behälterwand angeordnet ist, wobei die Beschichtungsschicht ausgestaltet ist, um eine korrosive Substanz zu lagern;
wobei das Verbundmaterial der metallfreien Behälterwand aus einem Epoxy-Vinylesterharz auf Bisphenolbasis und mindestens einem Verstärkungsmaterial besteht, und wobei die Beschichtungsschicht aus einem Vinyl-Epoxy-Vinylesterharz auf Novolac-Basis und mindestens einem Verstärkungsmaterial besteht.

2. Mobile Filtervorrichtung (100) nach Anspruch 1, wobei das Verbundmaterial der metallfreien Behälterwand mit mindestens einer äußeren korrosionsbeständigen Beschichtungsschicht beschichtet ist, die entlang des Äußeren der Behälterwand angeordnet ist.

3. Mobile Filtervorrichtung (100) nach Anspruch 2, wobei die innere korrosionsbeständige Beschichtungsschicht das gleiche Material wie die äußere korrosionsbeständige Beschichtungsschicht umfasst; vorzugsweise aus dem gleichen Material besteht.

4. Mobile Filtervorrichtung (100) nach einem der Ansprüche 1 bis 3, wobei das Verbundmaterial des Weiteren mindestens ein Verstärkungsmaterial aus der folgenden Liste umfasst: Glasfasern (z. B. E-Glas, S-Glas, C-Glas, ECR-Glas), Kohle, Textil, gewebte Verstärkungen, gestrickte Verstärkungen, Schnittstrangmatte oder Schnittverstärkungen, kontinuierliche Wanderverstärkung, Oberflächenschleier (z. B. Glasschleier), Kohlegraphit, Kohleschleier und -kerne (z. B. End Grain Balsa, Styrol-Acrylnitril- (SAN)-Schaum, Polyvinylchlorid (PVC)-Schaum und/oder Polyethylenterephthalat (PET)-Schaum); vorzugsweise Kohleschleier, C-Glasschleier, ECR (elektronisch korrosionsbeständige)-Glasfasern, ECR (elektronisch korrosionsbeständiger)-Glasschleier.

5. Mobile Filtervorrichtung (100) nach einem der Ansprüche 1 bis 4, wobei das Verbundmaterial der metallfreien Behälterwand aus einem Epoxy-Vinylesterharz auf Bisphenolbasis und ECR-Glasfasern besteht; und wobei die mindestens eine innere korrosionsbeständige Beschichtungsschicht aus Epoxy-Vinylesterharz auf Novolacbasis, 2 Kohleschleiern, 2 C-Glasschleiern und ECR-Glasfasern besteht.

6. Mobile Filtervorrichtung (100) nach einem der Ansprüche 1 bis 5, wobei der Filter vorgesehen ist, um ein korrosives Material gemäß einem Filtrationsverfahren ausgewählt aus der folgenden Liste zu verarbeiten: biologische Filtration, Adsorptionsbetten, Sandfiltration, Zweischichtfiltration, Harzionenaustausch, molekulare Filtration und/oder Kohlefiltation.

7. Mobile Filtervorrichtung (100) nach einem der Ansprüche 1 bis 6, wobei der Filter ein Aktivkohlefilter ist.

8. Mobile Filtervorrichtung (100) nach einem der Ansprüche 1 bis 7, wobei die Halterung (300) nicht-demontierbar an dem Tankbehälter (200) fixiert ist.

9. Mobile Filtervorrichtung (100) nach einem der Ansprüche 1 bis 8, wobei die Halterung (300) ausgestaltet ist, um wiederholt an einer komplementären Transporthalterung (410), welche in der Transportvorrichtung (400) enthalten ist, befestigt, in diese eingerastet, damit arretiert, verknüpft, daran gekoppelt und/oder damit verbunden zu werden.

10. Mobile Filtervorrichtung (100) nach einem der Ansprüche 1 bis 9, wobei der Tankbehälter eine zylindrische Form hat und durch beliebige der folgenden Parameter gekennzeichnet ist:
- eine Gesamtlänge von mindestens 4,0 m bis höchstens 15,0 m, bevorzugter mindestens 6,0 m bis höchstens 10,0 m, am meisten bevorzugt mindestens 7,0 m bis höchstens 9,0 m; beispielsweise 8,5 m;
- einen Innendurchmesser von mindestens 1,0 m bis höchstens 4,5 m, bevorzugter mindestens 1,5 m bis höchstens 3,5 m, am meisten bevorzugt mindestens 2,0 m bis höchstens 3,0 m; beispielsweise 2,2 m;
- einen Außendurchmesser von mindestens 1,0 m bis höchstens 4,6 m, bevorzugter mindestens 1,5 m bis höchstens 3,6 m, am meisten bevorzugt mindestens 2,0 m bis höchstens 3,1 m; beispielsweise 2,4 m;
- eine Wanddicke, definiert als die Hälfte des Unterschieds zwischen dem Außendurchmesser und dem Innendurchmesser, von mindestens 1,0 cm bis höchstens 20,0 cm; vorzugsweise mindestens 2,5 cm bis höchstens 15,0 cm; bevorzugter mindestens 4,0 cm bis höchstens 10,0 cm; am meisten bevorzugt mindestens 5,0 cm bis höchstens 7,5 cm; beispielsweise 5,5 cm;
- ein Innenvolumen von mindestens 1,0 m³ und höchstens 40,0 m³, bevorzugt mindestens 10,0 m³ bis höchstens 35,0 m³; bevorzugter mindestens 20,0 m³ bis höchstens 30,0 m³; am meisten bevorzugt mindestens 22,5 m³ bis höchstens 27,5 m³; beispielsweise 24,5 m³.

11. Mobile Filtervorrichtung (100) nach einem der Ansprüche 1 bis 10, wobei die korrosionsbeständige Beschichtungsschicht durch eine Dicke von mindestens 1,0 mm bis höchstens 10,0 mm; vorzugsweise mindestens 2,5 mm bis höchstens 7,5 mm; bevorzugter mindestens 3,0 mm bis höchstens 6,0 mm; am meisten bevorzugt mindestens 4,0 mm bis höchstens 5,0 mm; beispielsweise 5,0 mm gekennzeichnet ist.

12. Mobile Filtervorrichtung (100) nach einem der Ansprüche 1 bis 11, wobei der Tankbehälter (200) ausgestaltet ist, um einen Innendruck von mindestens 0 bar bis höchstens 15 bar; vorzugsweise mindestens 2 bar bis höchstens 10 bar; bevorzugter mindestens 3 bar bis höchstens 7 bar; am meisten bevorzugt mindestens 4 bar bis höchstens 6 bar auszuhalten; beispielsweise 5 bar.

13. Verwendung einer mobilen Filtervorrichtung (100) nach einem der Ansprüche 1 bis 12 zur Annahme, Lagerung, Handhabung, Filtration und/oder zum Transport einer korrosiven Substanz von der folgenden Liste: Salpetersäure, Bernsteinsäure, Milchsäure, Salzsäure, Schwefelsäure, alkalische Inhalte, Monochorbenzol (MCB) in Salzsäure (HCl) und Toluol oder Xylol in alkalischen Lösungen.

## Revendications

1. Dispositif à filtre mobile (100) pour une substance corrosive sélectionnée à partir de solvants organiques dans une solution alcaline ou acide et/ou de combinaisons de ceux-ci, le dispositif à filtre mobile (100) comprenant :
- un conteneur citerne (200), configuré pour la réception, le stockage et l'évacuation de la substance corrosive ;
- un filtre, disposé au sein du conteneur citerne et configuré pour le traitement de la substance corrosive ;
- un support (300), adapté pour un raccordement démontable renouvelable à un dispositif de transport (400) ;
**caractérisé en ce que** le conteneur citerne (200) comprend une paroi de conteneur exempte de métal, la paroi de conteneur comprenant un matériau composite revêtu avec au moins une couche de revêtement interne résistant à la corrosion disposée le long de l'intérieur de la paroi de conteneur, ladite couche de revêtement étant configurée pour stocker une substance corrosive ;
dans lequel le matériau composite de la paroi de conteneur exempte de métal est constitué par une résine d'ester vinylique époxy à base de bisphénol et au moins un matériau de renforcement, et la couche de revêtement est constituée par une résine d'ester vinylique vinylique époxy à base de novolaque et au moins un matériau de renforcement.

2. Dispositif à filtre mobile (100) selon la revendication 1, dans lequel le matériau composite de la paroi de conteneur exempte de métal est revêtu avec au moins une couche de revêtement externe résistant à la corrosion disposée le long de l'extérieur de la paroi de conteneur.

3. Dispositif à filtre mobile (100) selon la revendication 2, dans lequel la couche de revêtement interne résistant à la corrosion comprend le même matériau que la couche de revêtement externe résistant à la corrosion ; de préférence est constituée par le même matériau.

4. Dispositif à filtre mobile (100) selon l'une quelconque des revendications 1 à 3, dans lequel le matériau composite comprend en outre au moins un matériau de renforcement de la liste suivante : des fibres de verre (par exemple du verre E, du verre S, du verre C, du verre ECR), du carbone, du textile, des renforcements tissés, des renforcements tricotés, des renforcements à natte de brins hachés ou de hachage, un renforcement itinérant continu, des voiles de surface (par exemple des voiles de verre), du graphite de carbone, des voiles et des noyaux de carbone (par exemple du balsa de bois de bout, de la mousse d'acrylonitrile et de styrène (SAN), de la mousse de polychlorure de vinyle (PVC) et/ou de la mousse de polyéthylène téréphtalate (PET)) ; de préférence des voiles de carbone, des voiles de verre C, des fibres de verre ECR (résistant à la corrosion électronique), un voile de verre ECR (résistant à la corrosion électronique).

5. Dispositif à filtre mobile (100) selon l'une quelconque des revendications 1 à 4, dans lequel le matériau composite de la paroi de conteneur exempte de métal est constitué par une résine d'ester vinylique époxy à base de bisphénol et des fibres de verre ECR; et l'au moins une couche de revêtement interne résistante à la corrosion est constituée par une résine d'ester vinylique époxy à base de novolaque, 2 voiles de carbone, des fibres de verre 2C et des fibres de verre ECR.

6. Dispositif à filtre mobile (100) selon l'une quelconque des revendications 1 à 5, dans lequel le filtre est adapté pour traiter un matériau corrosif selon un procédé de filtration sélectionné à partir de la liste suivante : le filtrage biologique, les billes d'adsorption, la filtration sur sable, la filtration sur deux couches, l'échange d'ions de résine, le filtrage moléculaire et/ou le filtrage de carbone.

7. Dispositif à filtre mobile (100) selon l'une quelconque des revendications 1 à 6, dans lequel le filtre est un filtre à charbon actif.

8. Dispositif à filtre mobile (100) selon l'une quelconque des revendications 1 à 7, dans lequel le support (300) est fixé de manière non démontable au conteneur citerne (200).

9. Dispositif à filtre mobile (100) selon l'une quelconque des revendications 1 à 8, dans lequel le support (300) est configuré pour attacher, verrouiller, fermer, relier, coupler et/ou raccorder de manière répétée avec un support de transport complémentaire (410) compris sur le dispositif de transport (400).

10. Dispositif à filtre mobile (100) selon l'une quelconque des revendications 1 à 9, dans lequel le conteneur citerne a une forme cylindrique et est **caractérisé par** l'un quelconque des paramètres suivants :
- une longueur totale d'au moins 4,0 m à au plus 15,0 m, plus préférablement d'au moins 6,0 m à au plus 10,0 m, le plus préférablement d'au moins 7,0 m à au plus 9,0 m ; par exemple de 8,5 m ;
- un diamètre interne d'au moins 1,0 m à au plus 4,5 m, plus préférablement d'au moins 1,5 m à au plus 3,5 m, le plus préférablement d'au moins 2,0 m à au plus 3,0 m ; par exemple de 2,2 m ;
- un diamètre externe d'au moins 1,0 m à au plus 4,6 m, plus préférablement d'au moins 1,5 m à au plus 3,6 m, le plus préférablement d'au moins 2,0 m à au plus 3,1 m ; par exemple de 2,4 m ;
- une épaisseur de paroi, définie comme étant la moitié de la différence entre le diamètre externe et le diamètre interne, d'au moins 1,0 cm à au plus 20,0 cm ; de préférence d'au moins 2,5 cm à au plus 15,0 cm ; plus préférablement d'au moins 4,0 cm à au plus 10,0 cm; le plus préférablement d'au moins 5,0 cm à au plus 7,5 cm; par exemple de 5,5 cm ;
- un volume interne d'au moins 1,0 m³ et d'au plus 40,0 m³, de préférence d'au moins 10,0 m³ à au plus 35,0 m³ ; plus préférablement d'au moins 20,0 m³ à au plus 30,0 m³ ; le plus préférablement d'au moins 22,5 m³ à au plus 27,5 m³ ; par exemple de 24,5 m³.

11. Dispositif à filtre mobile (100) selon l'une quelconque des revendications 1 à 10, dans lequel la couche de revêtement résistante à la corrosion est **caractérisée par** une épaisseur d'au moins 1,0 mm à au plus 10,0 mm ; de préférence d'au moins 2,5 mm à au plus 7,5 mm ; plus préférablement d'au moins 3,0 mm à au plus 6,0 mm ; le plus préférablement d'au moins 4,0 mm à au plus 5,0 mm ; par exemple de 5,0 mm.

12. Dispositif à filtre mobile (100) selon l'une quelconque des revendications 1 à 11, dans lequel le conteneur citerne (200) est configuré pour résister à une pression interne d'au moins 0 bar à au plus 15 bar ; de préférence d'au moins 2 bar à au plus 10 bar ; plus préférablement d'au moins 3 bar à au plus 7 bar ; le plus préférablement d'au moins 4 bar à au plus 6 bar ; par exemple de 5 bar.

13. Utilisation d'un dispositif à filtre mobile (100) selon l'une quelconque des revendications 1 à 12 pour recevoir, stocker, manipuler, filtrer et/ou transporter une substance corrosive de la liste suivante : l'acide nitrique, l'acide succinique, l'acide lactique, l'acide chlorhydrique, l'acide sulfurique, les contenus alcalins, le monochlorobenzène (MCB) dans l'acide chlorhydrique (HCL) et le toluène ou le xylène dans des solutions alcalines.
